# EUROPEAN PATENT APPLICATION

(11) **EP 4 733 971 A1**
(43) Date of publication of application: **29.04.2026**
(21) Application number: 24842015.0
(22) Date of filing: 29.04.2024
(51) Int. Cl.: G06F 21/60

(54) **DATA SECURITY METHOD, RELATED APPARATUS, AND SYSTEM**

(30) Priority: 18.07.2023 CN 202310882615
(71) Applicant: Huawei Technologies Co., Ltd., Shenzhen, Guangdong 518129 (CN)
(72) Inventor: WANG, Chenyu, Shenzhen, Guangdong 518129 (CN); YUAN, Jinfeng, Shenzhen, Guangdong 518129 (CN); JIN, Yier, Shenzhen, Guangdong 518129 (CN)
(74) Representative: Gill Jennings & Every LLP
(86) International application number: PCT/CN2024/090517
(87) International publication number: WO 2025/016015

(57) **Abstract**

This application provides a data confidentiality method, a related apparatus, and a system. The method relates to the virtualization field, and is applied to a heterogeneous device. Some or all hardware resources in the heterogeneous device are divided into a trusted execution environment TEE side. Confidential data is preset on the TEE side of the heterogeneous device. The method includes: A processor of the heterogeneous device verifies, on the TEE side, whether a virtual machine running on a TEE side of a host can obtain the confidential data in the heterogeneous device; and when the virtual machine running on the TEE side of the host cannot obtain the confidential data, the TEE side of the heterogeneous device receives an access request that is of the virtual machine running on the TEE side of the host and that is for the TEE side of the heterogeneous device. According to embodiments of this application, the confidential data can be protected from leakage and theft.

## Description

This application claims priority to Chinese Patent Application No. 202310882615.0, filed with the China National Intellectual Property Administration on July 18, 2023 and entitled "DATA CONFIDENTIALITY METHOD, RELATED APPARATUS, AND SYSTEM", which is incorporated herein by reference in its entirety.

### TECHNICAL FIELD

This application relates to the virtualization field, and in particular, to a data confidentiality method, a related apparatus, and a system.

### BACKGROUND

Confidential computing is a computing mode that builds an encrypted, isolated, and provable computing environment based on trusted hardware in combination with firmware and software to ensure data confidentiality and integrity, and computing process confidentiality in an environment. A general computing environment is isolated from a confidential computing environment through an isolation mechanism. Unauthorized applications cannot access the confidential computing environment. Applications running in the confidential computing environment are verified to ensure application integrity and authority. An encryption mechanism ensures that data is encrypted during computing in memory, preventing privileged software or even hardware from snooping.

A confidential computing technology is based on a trusted execution environment (trusted execution environment, TEE) of a hardware architecture. A hardware isolation mechanism ensures that code and data run in the TEE cannot be accessed or tampered with by untrusted code.

In large-scale computing application scenarios such as machine learning and neural networks, the confidential computing can be applied to heterogeneous systems. However, a current trusted execution environment technology cannot meet a requirement of an owner of confidential data to protect the confidential data from theft.

### SUMMARY

This application provides a data confidentiality method, a related apparatus, and a system, and proposes a new application scenario. The data confidentiality method meets a requirement of the new application scenario, and ensures that confidential data is not leaked and stolen.

According to a first aspect, this application provides a data confidentiality method, where the method is applied to a heterogeneous device, some or all hardware resources in the heterogeneous device are divided into a trusted execution environment TEE side, confidential data is preset on the TEE side of the heterogeneous device, and the method includes:
verifying, by a processor of the heterogeneous device on the TEE side, integrity of a TEE side of a host, where the integrity of the TEE side of the host includes that a virtual machine running on the TEE side of the host does not have a read operation capability and a write operation capability on the confidential data in the heterogeneous device, and the heterogeneous device and the host form a heterogeneous system; and
when verification on the integrity of the TEE side of the host succeeds, receiving, by the TEE side of the heterogeneous device, an access request that is of the virtual machine running on the TEE side of the host and that is for the TEE side of the heterogeneous device.

This application proposes a new application scenario and requirement, to be specific, an owner of the confidential data does not belong to a cloud service platform, the host, or a virtual machine tenant. The owner of the confidential data does not want the cloud service platform, the host, or the virtual machine tenant to obtain the confidential data, but allows the cloud service platform, the host, or the virtual machine tenant to use the confidential data through the heterogeneous device. In view of the new application scenario and requirement, this application provides the data confidentiality method. The confidential data that needs to be protected is placed on the TEE side of the heterogeneous device, hardware resources on the host are divided into a TEE side and an REE side, and the processor of the heterogeneous device verifies, on the TEE side, the integrity of the TEE side of the host. The integrity of the TEE side of the host includes: The virtual machine running on the TEE side of the host does not have a read operation capability and a write operation capability on the confidential data in the heterogeneous device. Only when the verification on the integrity of the TEE side of the host succeeds, the TEE side of the heterogeneous device receives the access request that is of the virtual machine running on the TEE side of the host and that is for the TEE side of the heterogeneous device, and the virtual machine running on the TEE side of the host is allowed to use the confidential data through the heterogeneous device. The data confidentiality method meets requirements of the newly proposed application scenario, and prevents confidential data from being leaked or stolen.

Based on the first aspect, in a possible implementation, that the processor of the heterogeneous device verifies, on the TEE side, the integrity of the TEE side of the host includes: The processor of the heterogeneous device verifies, on the TEE side, integrity of a virtual machine manager hypervisor on the TEE side of the host, and/or integrity of a virtual function driver module of the virtual machine running on the TEE side of the host, where the integrity of the virtual machine manager hypervisor includes that a target address is not mapped to the virtual machine manager hypervisor, the target address includes a mapping address of the confidential data in the heterogeneous device in a memory of the host, and the integrity of the virtual function driver module includes forbidding the virtual machine to perform a read operation and a write operation on the target address.

It may be understood that, to make the virtual machine running on the TEE side of the host incapable of performing a read operation and a write operation on the confidential data in the heterogeneous device, an implementation may be that the virtual machine manager on the TEE side of the host does not map the target address to the virtual machine manager, and the virtual machine cannot access the target address, that is, cannot access the confidential data. Another implementation may be that the virtual function driver module of the virtual machine running on the TEE side of the host includes logic code for forbidding the virtual machine to perform a read operation and a write operation on the target address, and the virtual machine cannot access the target address, that is, cannot access the confidential data.

Based on the first aspect, in a possible implementation, that the processor of the heterogeneous device verifies, on the TEE side, the integrity of the TEE side of the host includes: The processor of the heterogeneous device generates a random number on the TEE side, and sends the random number to the TEE side of the host; and the processor of the heterogeneous device receives, on the TEE side, a measurement value sent by the TEE side of the host, and verifies the integrity of the TEE side of the host based on the measurement value.

Based on the first aspect, in a possible implementation, the access request carries input data, and the method further includes: The processor of the heterogeneous device performs processing based on the input data using the confidential data, to obtain a processing result; and the processor of the heterogeneous device sends the processing result to the virtual machine running on the TEE side of the host.

It may be understood that the virtual machine running on the TEE side of the host cannot directly read the confidential data, but may perform a data processing operation based on the confidential data through the heterogeneous device. For the virtual machine, the confidential data is similar to a "black box". The virtual machine provides the input data, and the heterogeneous device uses the "black box" to process the input data, and then returns the processing result to the virtual machine, thereby implementing computing based on the confidential data, and meeting a requirement of the application scenario of this application.

Based on the first aspect, in a possible implementation, the method further includes: when the verification on the integrity of the TEE side of the host fails, the TEE side of the heterogeneous device rejects to receive the access request that is of the virtual machine running on the TEE side of the host and that is for the TEE side of the heterogeneous device.

According to a second aspect, this application provides a heterogeneous device, where some or all hardware resources in the heterogeneous device are divided into a trusted execution environment TEE side, and confidential data is preset on the TEE side of the heterogeneous device, and the heterogeneous device includes:
a security management module, configured to verify, on the TEE side of the heterogeneous device, integrity of a TEE side of a host, where the integrity of the TEE side of the host includes that a virtual machine running on the TEE side of the host does not have a read operation capability and a write operation capability on the confidential data in the heterogeneous device, the heterogeneous device and the host form a heterogeneous system, and the security management module is located on the TEE side of the heterogeneous device; and
a communication module, configured to: when verification on the integrity of the TEE side of the host succeeds, receive, on the TEE side of the heterogeneous device, an access request that is of the virtual machine running on the TEE side of the host and that is for the TEE side of the heterogeneous device.

Based on the second aspect, in a possible implementation, the security management module is configured to: verify, on the TEE side of the heterogeneous device, integrity of a virtual machine manager hypervisor on the TEE side of the host, and/or integrity of a virtual function driver module of the virtual machine running on the TEE side of the host, where the integrity of the virtual machine manager hypervisor includes that a target address is not mapped to the virtual machine manager hypervisor, the target address includes a mapping address of the confidential data in the heterogeneous device in a memory of the host, and the integrity of the virtual function driver module includes forbidding the virtual machine to perform a read operation and a write operation on the target address.

Based on the second aspect, in a possible implementation,
the security management module is configured to generate a random number on the TEE side of the heterogeneous device;
the communication module is configured to send the random number to the TEE side of the host;
the communication module is configured to receive, on the TEE side of the heterogeneous device, a measurement value sent by the TEE side of the host; and
the security management module is configured to verify the integrity of the TEE side of the host based on the measurement value.

Based on the second aspect, in a possible implementation, the access request carries input data, and the heterogeneous device further includes:
a processing module, configured to perform processing based on the input data using the confidential data, to obtain a processing result; and
the communication module is configured to send the processing result to the virtual machine running on the TEE side of the host.

Based on the second aspect, in a possible implementation, the communication module is further configured to: when the verification on the integrity of the TEE side of the host fails, reject, on the TEE side of the heterogeneous device, to receive the access request that is of the virtual machine running on the TEE side of the host and that is for the TEE side of the heterogeneous device.

Functional modules in the second aspect are configured to implement the method according to the first aspect or any one of the possible implementations of the first aspect.

According to a third aspect, this application provides a heterogeneous device, including a memory and a processor. The memory is configured to store instructions, and the processor is configured to execute the instructions stored in the memory to implement the method according to the first aspect or any one of the possible implementations of the first aspect.

According to a fourth aspect, this application provides a computer storage medium, including program instructions, and when the program instructions are executed by a processor, the processor is enabled to perform the method according to the first aspect or any one of the possible implementations of the first aspect.

According to a fifth aspect, this application provides a data confidentiality system, including a host and a heterogeneous device, where some or all hardware resources in the heterogeneous device are divided into a trusted execution environment TEE side, some hardware resources in the host are divided into a trusted execution environment TEE side, confidential data is preset on the TEE side of the heterogeneous device, and the heterogeneous device is configured to perform the method according to the first aspect or any one of the possible implementations of the first aspect.

According to a sixth aspect, this application provides a computer program product, including program instructions. When the program instructions are run on a heterogeneous device, the heterogeneous device is enabled to perform the method according to the first aspect or any one of the possible implementations of the first aspect.

### BRIEF DESCRIPTION OF DRAWINGS

FIG. 1 is a diagram of a scenario according to this application;
FIG. 2 is a diagram of a structure of a system according to this application;
FIG. 3 is a diagram of a structure of a system used in a confidential computing scenario according to this application;
FIG. 4 is a diagram of a scenario according to this application;
FIG. 5 is a diagram of an architecture of a data confidentiality system according to this application;
FIG. 6 is a schematic flowchart of a data confidentiality method according to this application;
FIG. 7 is a diagram of a structure of a system according to this application;
FIG. 8 is a schematic flowchart of a method for verifying integrity of a TEE side of a host according to this application;
FIG. 9 is a diagram of a state machine according to this application;
FIG. 10 is a diagram of a structure of a heterogeneous device according to this application; and
FIG. 11 is a diagram of an entity structure of a heterogeneous device according to this application.

### DESCRIPTION OF EMBODIMENTS

Before embodiments of this application are described, technical terms in embodiments of this application are first described.

A trust zone (trust zone) technology was first introduced in an ARMv6 version as a security extension. The technology divides hardware resources of a computing device into two worlds: a trusted execution environment (trusted execution environment, TEE) and a rich execution environment (rich execution environment, REE). The TEE may also be referred to as a secure execution environment or a secure world, and the REE may also be referred to as a normal execution environment, a non-secure execution environment, or a non-secure world.

Security of the REE is lower than security of the TEE. When a processor works on an REE side, the processor can access a resource on the REE side, but cannot access a resource (like a register, a memory, a cache (cache), and a peripheral) on a TEE side. When the processor works on the TEE side, the processor can access both the resource on the TEE side and the resource on the REE side. An essential difference between the TEE and the REE lies in permission. The TEE side has higher operation permission than the REE side.

In actual application, a plurality of different types of processors are involved. The plurality of different types of processors may be, for example, a central processing unit (central processing unit, CPU), a graphics processing unit (graphical processing unit, GPU), and a neural network processing unit (neural network processing unit, NPU). Different types of processors have different performance. For example, a CPU has a strong logic control capability and a weak computing capability, and especially has a limited capability when facing large-scale computing. A GPU or an NPU has a weak logic control capability and a strong computing capability, and is especially good at large-scale computing.

The CPU is a processor on a host, and the host processes an instruction or data through the CPU. The host may be, for example, a desktop computer, a personal notebook computer, or a physical server. In this application, another processor runs on a heterogeneous device, and the another processor is a non-CPU. For example, a GPU runs on the heterogeneous device, and the heterogeneous device processes data through the GPU. For another example, an NPU runs on the heterogeneous device, and the heterogeneous device processes data through the NPU. To be specific, the heterogeneous device is relative to the host. Relative to the processor of the host, the processor of the heterogeneous device is heterogeneous.

The heterogeneous device may exist in a form of an intelligent network interface card. Optionally, the heterogeneous device may be inserted into the host, or establish a contact with the host in another manner. The processor on the host and the processor on the heterogeneous device work together to achieve efficient computing. A system formed by the heterogeneous device and the host may be referred to as a heterogeneous system.

This application proposes a new application requirement, which is described as follows.

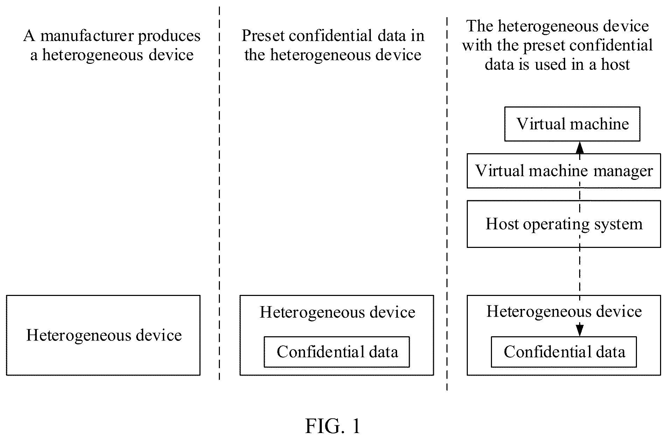

Confidential data is preset in the heterogeneous device, or the confidential data is deployed on the heterogeneous device. An owner of the confidential data does not want the confidential data to be obtained by another device, including that the owner does not want the another device to read the confidential data and modify a parameter in the confidential data, but allows the another device to use the confidential data to perform computing through the heterogeneous device. For example, as shown in a diagram of FIG. 1, a manufacturer produces a heterogeneous device, and a big data computing company presets confidential data in the heterogeneous device. The confidential data may be, for example, a neural network model. When the heterogeneous device preset with the confidential data is used in a host, an owner of the confidential data expects that the host or a virtual machine deployed on the host cannot obtain the confidential data on the heterogeneous device and modify the confidential data on the heterogeneous device, but allows the host or the virtual machine on the host to use the confidential data according to another instruction. For example, the host or the virtual machine on the host delivers an instruction to the heterogeneous device. The instruction carries input data. The heterogeneous device performs processing based on the input data and the preset confidential data (for example, an AI model), to obtain a processing result. The heterogeneous device reports the processing result to the host or the virtual machine on the host.

To be specific, in the application requirement, the confidential data is not disclosed to another device and another user. The another device is a device other than the heterogeneous device. The another device includes the host and the virtual machine. The another user includes a virtual machine tenant and a cloud service platform. For another device, the confidential data is similar to a "black box", and the another device cannot obtain data in the "black box". However, the another device may use, through the heterogeneous device, the data in the "black box" for computing. When the another device needs to use the confidential data for computing, the another device may send an instruction to the heterogeneous device. The heterogeneous device performs computing according to the instruction based on the confidential data, and then the heterogeneous device sends a processing result to the another device.

It should be noted that the confidential data may be a trained neural network model, or may be other data that needs to be protected. The confidential data is not limited in this application.

For the application requirement proposed in this application, a conventional data confidentiality method cannot meet a requirement of the application scenario. Embodiments of this application provide a data confidentiality method and system. Before the data confidentiality method and system provided in embodiments of this application are described, a technology related to the method in embodiments of this application is first described.

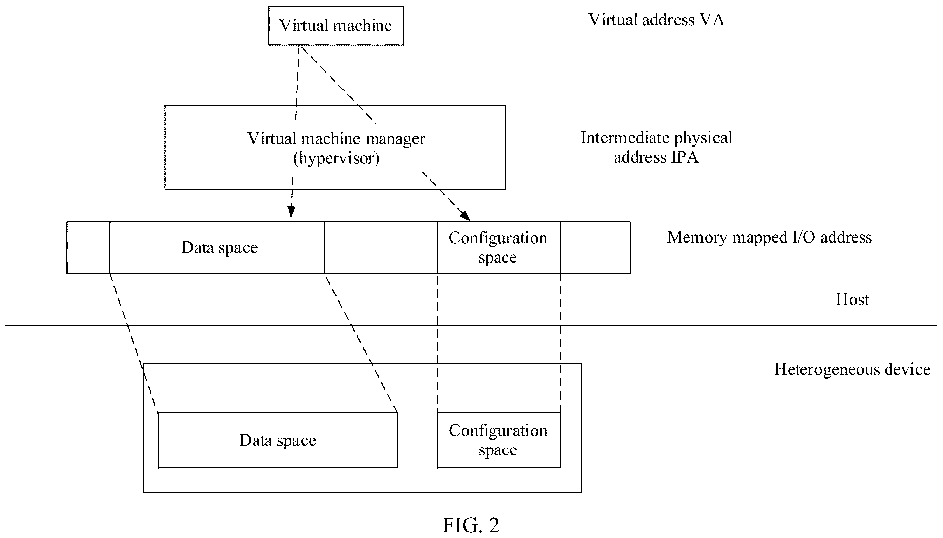

FIG. 2 is a diagram of a structure of a system according to this application. The system includes a host and a heterogeneous device, and the host and the heterogeneous device form a heterogeneous system. A processor on the host creates a virtual machine on a host operating system by using a virtual machine manager.

In the heterogeneous system, the heterogeneous device provides data space and configuration space. The data space is used to store data, for example, data transmitted between the host and the heterogeneous device. The configuration space is used to store a configuration instruction and a control instruction, for example, a configuration instruction and a control instruction of the host for the heterogeneous device. The data space and the configuration space on the heterogeneous device cannot be directly accessed by the host. To make software on the host access the heterogeneous device, a bus controller (for example, a peripheral component interconnect express (peripheral component interconnect express, PCIe) controller) on the host divides a segment of address space from memory of the host. The address space may be referred to as memory mapped I/O (memory mapped I/O, MMIO) space, and the segment of address space is used to map the data space and the configuration space of the heterogeneous device, as shown in a mapping relationship in FIG. 2.

In a device passthrough scenario, when a virtual machine running on the host accesses the data space and the configuration space of the heterogeneous device by using a virtual address (virtual address, VA), mapping in two phases needs to be performed: a virtual address -> an intermediate physical address (intermediate physical address, IPA) -> a MMIO address. The mapping in a virtual address -> intermediate physical address phase is completed by the virtual machine, and the mapping in an intermediate physical address -> MMIO phase is completed by the virtual machine manager.

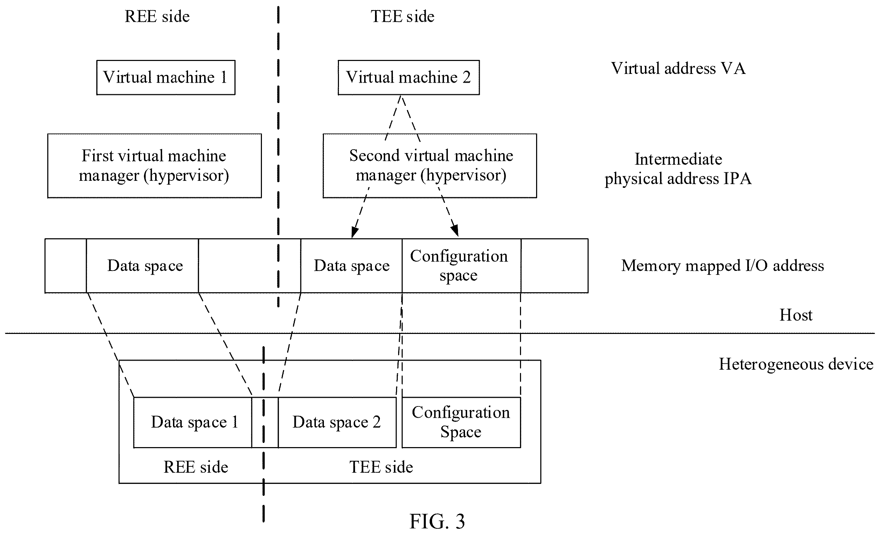

FIG. 3 is a diagram of a structure of a system used in a confidential computing scenario according to an embodiment of this application. In this scenario, hardware resources on a host are divided into a trusted execution environment TEE side and a rich execution environment REE side. The hardware resources include computing power resources and memory. A first virtual machine manager (hypervisor) is deployed on the REE side of the host, and a virtual machine 1 runs on the first virtual machine manager. A second virtual machine manager is deployed on the TEE side of the host, and a virtual machine 2 runs on the second virtual machine manager. It may be understood that MMIO address space is also divided into a TEE side and an REE side. The virtual machine 1 can access only the MMIO address space on the REE side, and the virtual machine 2 can access the MMIO address space on the TEE side. Optionally, the virtual machine 2 may also access the MMIO address space on the REE side.

Hardware resources on a heterogeneous device are divided into a TEE side and an REE side. As shown in FIG. 3, the TEE side includes data space 2 and configuration space, and the REE side includes data space 1 and configuration space (not shown in the figure). Herein, for ease of description, a segment of data space is marked with a number. Address space on the TEE side of the heterogeneous device is mapped to the MMIO space on the TEE side of the host, and address space on the REE side of the heterogeneous device is mapped to the MMIO space on the REE side of the host, as shown in FIG. 3. Therefore, the virtual machine 2 can access the address space on the TEE side of the heterogeneous device, and the virtual machine 1 can access the address space on the REE side of the heterogeneous device.

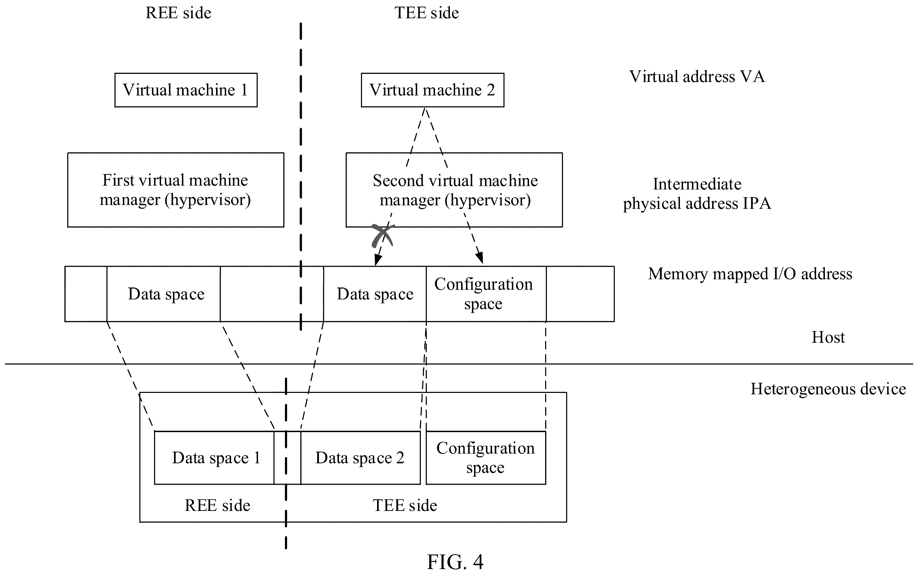

An application scenario requirement in this application is as follows: Confidential data in the heterogeneous device is forbidden to be obtained by the virtual machine running on the host, and the virtual machine cannot access a target address. The target address includes a mapping address of the confidential data in the heterogeneous device in a memory of the host. To meet the scenario requirement in this embodiment of this application and protect the confidential data from theft or leakage, the confidential data is usually preset in storage space on the TEE side of the heterogeneous device. For example, the confidential data is preset in data space on the TEE side of the heterogeneous device in FIG. 3. If the confidential data is forbidden to be obtained by the virtual machine running on the host, the virtual machine 2 needs to fail to access a target address, as shown in FIG. 4, so that a mapping relationship between the virtual machine 2 and the target address cannot be met, namely, as shown in "" in FIG. 4.

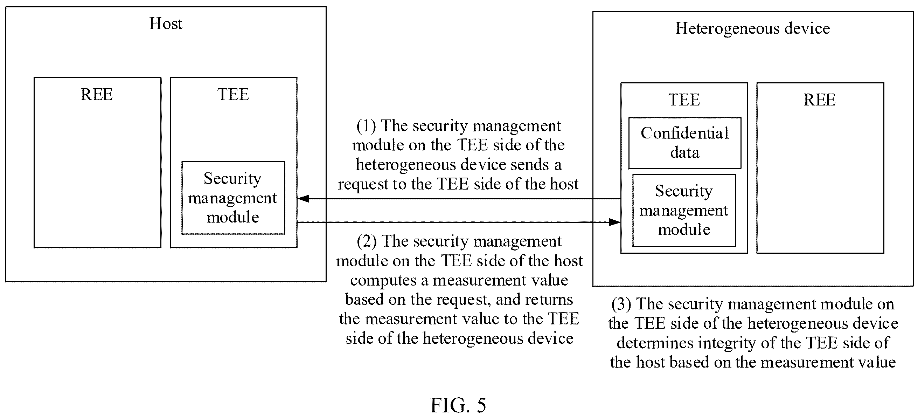

Based on the system architecture shown in FIG. 4, this application provides a data confidentiality method and a data confidentiality system. FIG. 5 is a diagram of an architecture of a data confidentiality system according to this application. The data confidentiality system includes a host and a heterogeneous device. Hardware resources of the host are divided into a TEE side and an REE side. The TEE side of the host includes a security management module. The security management module is configured to manage the hardware resources on the TEE side of the host. Hardware resources on the heterogeneous device are divided into a TEE side and an REE side. Confidential data is preset on the TEE side of the heterogeneous device. The TEE side of the heterogeneous device includes a security management module. The security management module is configured to manage the hardware resources on the TEE side of the heterogeneous device.

Optionally, if hardware capabilities of the heterogeneous device do not support division of the hardware resources into the TEE side and the REE side, to be specific, if the hardware capabilities do not support division of access permission on the hardware resources, because software installed on the heterogeneous device is simple, control logic is weak, and a probability of a security vulnerability is low, it is considered that an environment on the heterogeneous device is trusted, namely, the TEE.

That a processor of the heterogeneous device verifies, on the TEE side, integrity of the TEE side of the host specifically includes: A security management module on the TEE side of the heterogeneous device sends a request to the TEE side of the host, where the request is used to verify the integrity of the TEE side of the host, and the request carries a random number; after receiving the request, the security management module on the TEE side of the host computes a measurement value on the TEE side of the host based on the random number, and returns the measurement value to the security management module on the TEE side of the heterogeneous device; and the security management module on the TEE side of the heterogeneous device determines the integrity of the TEE side of the host based on the measurement value. When it is determined that the integrity of the TEE side of the host succeeds, the TEE side of the heterogeneous device establishes an encrypted channel with the TEE side of the host, and the TEE side of the heterogeneous device receives an access request sent by the TEE side of the host. When it is determined that the integrity of the TEE side of the host fails, the TEE side of the heterogeneous device rejects to receive the access request sent by the TEE side of the host.

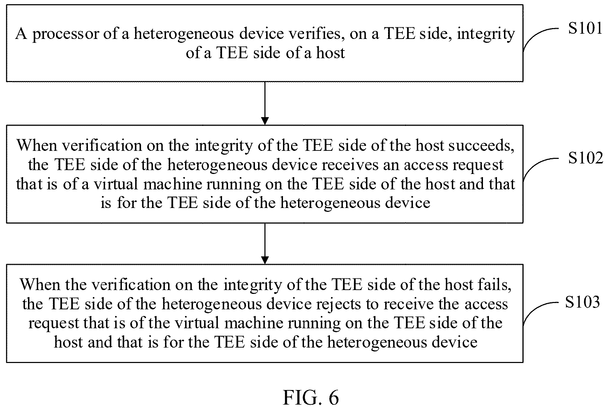

Based on the systems shown in FIG. 4 and FIG. 5, an embodiment of this application provides a data confidentiality method. FIG. 6 is a schematic flowchart of a data confidentiality method according to this application. The method includes but is not limited to descriptions of the following content.

S101: A processor of a heterogeneous device verifies integrity of a TEE side of a host on a TEE side of the heterogeneous device.

The integrity of the TEE side of the host includes that a virtual machine running on the TEE side of the host does not have a read operation capability and a write operation capability on confidential data in the heterogeneous device. For example, in the diagram of FIG. 4, the virtual machine 2 does not have a read operation capability and a write operation capability on the confidential data in the heterogeneous device. In other words, the processor of the heterogeneous device verifies, on the TEE side, whether the virtual machine on the host has the read and write operation capabilities on the confidential data in the heterogeneous device.

In an implementation, a virtual machine manager on the TEE side of the host does not map an intermediate physical address IPA to a target address, or does not map the target address on the virtual machine manager. The target address includes an MMIO address of the confidential data in the heterogeneous device in a memory of the host. In this implementation, the processor of the heterogeneous device needs to verify, on the TEE side, only integrity of the virtual machine manager on the TEE side of the host. If verification on the integrity of the virtual machine manager on the TEE side of the host succeeds, the virtual machine running on the TEE side of the host cannot read the confidential data. The integrity of the virtual machine manager includes that the target address is not mapped on the virtual machine manager.

In an implementation, a function of forbidding a read operation and a write operation to be performed on the target address is set for the virtual machine running on the TEE side of the host. In this implementation, the processor of the heterogeneous device needs to verify only integrity of a virtual function driver (virtual function driver, VF driver for short) module of the virtual machine running on the TEE side of the host. If verification on the integrity of the virtual function driver module of the virtual machine succeeds, the virtual machine running on the TEE side of the host cannot read the confidential data. The integrity of the virtual function driver module includes forbidding the virtual machine to perform a read operation and a write operation on the target address. Alternatively, the processor of the heterogeneous device verifies integrity of kernel code logic of the virtual machine running on the TEE side of the host. If verification on the integrity of the kernel code logic of the virtual machine succeeds, the virtual machine running on the TEE side of the host cannot read the confidential data. The integrity of the kernel code logic includes forbidding the virtual machine to perform a read operation and a write operation on the target address.

In an implementation, the processor of the heterogeneous device verifies, on the TEE side, the integrity of the virtual machine manager on the TEE side of the host and the integrity of the virtual function driver module of the virtual machine running on the TEE side of the host. If either of verification on the integrity of the virtual machine manager and verification on the integrity of the virtual function driver module succeeds, verification on the integrity of the TEE side of the host succeeds. If both the verification on the integrity of the virtual machine manager and the verification on the integrity of the virtual function driver module succeed, verification on the integrity of the host succeeds. If both the verification on the integrity of the virtual machine manager and the verification on the integrity of the virtual function driver module fail, the verification on the integrity of the host fails.

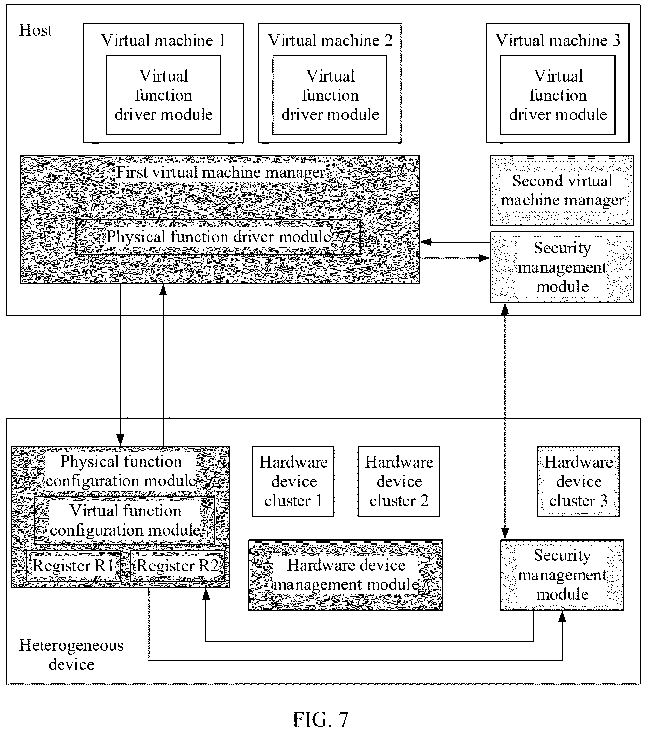

With reference to FIG. 7, the following describes how to verify the integrity of the TEE side of the host. FIG. 7 is a diagram of a structure of a system according to this application. In FIG. 7, the system includes a host and a heterogeneous device.

Hardware resources on the heterogeneous device are divided into a TEE side and an REE side. The REE side includes a hardware device cluster 1, a hardware device cluster 2, and a hardware device management module. The hardware device management module is configured to manage a hardware device on the REE side. The REE side further includes a physical function configuration module. The physical function configuration module is configured to communicate with a first virtual machine manager on the host. The TEE side includes a hardware device cluster 3 and a security management module. The security management module is configured to manage a hardware device on the TEE side. Confidential data is preset in the hardware device cluster 3 on the TEE side of the heterogeneous device.

Hardware resources on the host are divided into a TEE side and an REE side. The first virtual machine manager is deployed on the REE side, and a virtual machine 1 and a virtual machine 2 run on the first virtual machine manager. A second virtual machine manager is deployed on the TEE side, and a virtual machine 3 runs on the second virtual machine manager. The TEE side further includes a security management module. The security management module is configured to manage memory on the TEE side of the host. Optionally, the second virtual machine manager and the security management module may be integrated into one module, and the integrated module has functions of the second virtual machine manager and the security management module.

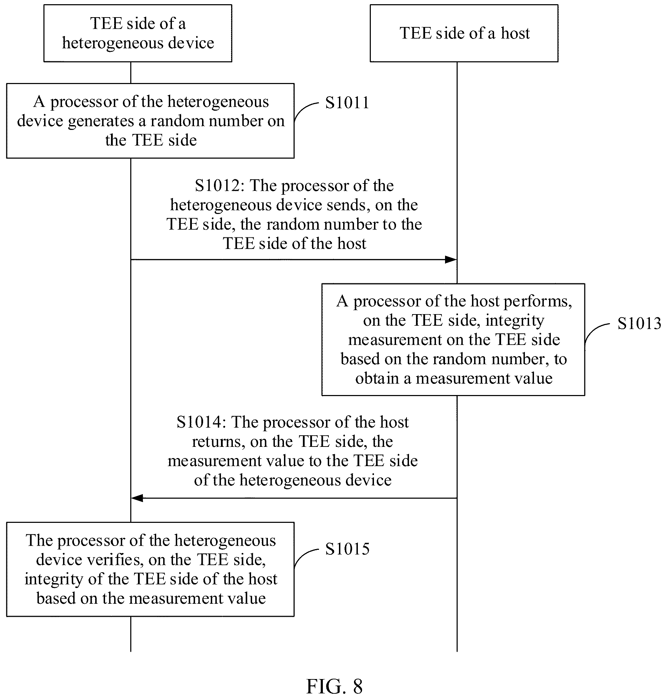

FIG. 8 is a schematic flowchart of a method for verifying integrity of a TEE side of a host according to this application. The method includes but is not limited to descriptions of the following content.

S1011: A processor of a heterogeneous device generates a random number on a TEE side.

The processor of the heterogeneous device generates the random number nonce on the TEE side. The nonce is short for number once. In cryptography, the nonce is a random value that is used only once and that is random or non-repeated. In the diagram of FIG. 7, this step may be performed by the security management module on the TEE side of the heterogeneous device, and the security management module generates the nonce.

S1012: The processor of the heterogeneous device sends, on the TEE side, the random number to the TEE side of the host.

The processor of the heterogeneous device sends, on the TEE side, the random number to the TEE side of the host. In the diagram of FIG. 7, the security management module writes the generated random number into a register R1 of the heterogeneous device, and generates an interrupt. After receiving an interrupt signal, an interrupt processing function in the first virtual machine manager on the host processes the interrupt, and obtains the random number from the register R1 of the heterogeneous device, and the first virtual machine manager invokes an interface of the security management module on the TEE side, to send the random number to the security management module on the TEE side of the host. The register R1 may be located in configuration space of the REE side of the heterogeneous device.

S1013: A processor of the host performs, on the TEE side, integrity measurement on the TEE side based on the random number, to obtain a measurement value.

The processor of the host performs, on the TEE side, the integrity measurement on the TEE side. This step may be performed by the security management module on the TEE side of the host.

In an example, in the diagram shown in FIG. 7, code logic of the second virtual machine manager does not map the target address to the intermediate physical address. The target address includes the MMIO address of the confidential data in the heterogeneous device in the memory of the host. The security management module measures integrity of the second virtual machine manager based on the random number, to obtain a measurement value. An algorithm for measuring the integrity of the second virtual machine manager is set in the security management module, and the security management module computes the integrity of the second virtual machine manager according to the algorithm.

In an example, in the diagram shown in FIG. 7, code logic of the virtual function driver module of the virtual machine 3 includes forbidding the virtual machine 3 to perform a read operation and a write operation on the target address, or code logic of a kernel module of the virtual machine 3 includes forbidding the virtual machine 3 to perform a read operation and a write operation on the target address. The security management module measures integrity of the virtual function driver module of the virtual machine 3 or integrity of the kernel module of the virtual machine 3 based on the random number, to obtain a measurement value. An algorithm for measuring the integrity of the virtual function driver module or the integrity of the kernel module of the virtual machine 3 is set in the security management module. The security management module computes the integrity of the virtual function driver module or the integrity of the kernel module of the virtual machine 3 according to the algorithm.

In an example, in the diagram shown in FIG. 7, the security management module may measure both the integrity of the second virtual machine manager and the integrity of the virtual function driver module (or the kernel module) of the virtual machine 3, to obtain a measurement value. An algorithm for measuring the integrity of the second virtual machine manager and the integrity of the virtual function driver module (or the kernel module) of the virtual machine 3 is set in the security management module. The security management module computes the integrity of the second virtual machine manager and the integrity of the virtual function driver module (or the kernel module) of the virtual machine 3 according to the algorithm.

S1014: The processor of the host returns, on the TEE side, the measurement value to the TEE side of the heterogeneous device.

The processor of the host returns, on the TEE side, the measurement value to the TEE side of the heterogeneous device. In the diagram of FIG. 7, the security management module on the TEE side of the host returns the measurement value to the first virtual machine manager, the first virtual machine manager writes the measurement value into a register R2 of the heterogeneous device, and the security management module on the TEE side of the heterogeneous device reads the measurement value from the register R2. The register R2 may be located in the configuration space of the heterogeneous device.

S1015: The processor of the heterogeneous device verifies, on the TEE side, the integrity of the TEE side of the host based on the measurement value.

After receiving the measurement value on the TEE side, the processor of the heterogeneous device verifies the integrity of the TEE side of the host based on the measurement value. In the diagram of FIG. 7, this step may be performed by the security management module on the TEE side of the heterogeneous device.

In an implementation, an algorithm for computing the integrity of the TEE side of the host is set in the security management module on the TEE side of the heterogeneous device. The security management module compares the received measurement value with a measurement value computed by the security management module according to the algorithm. If the received measurement value is consistent with the measurement value computed by the security management module according to the algorithm, verification on the integrity of the TEE side of the host succeeds; or if the received measurement value is inconsistent with the measurement value computed by the security management module, verification on the integrity of the TEE side of the host fails.

In an implementation, the security management module on the TEE side of the heterogeneous device may not be provided with the algorithm for computing the integrity of the TEE side of the host. After computing a measurement value, the security management module on the TEE side of the host sends the measurement value to a third-party server. The third-party server stores an algorithm for computing the integrity. The third-party server compares the received measurement value with a measurement value computed by the third-party server according to the algorithm. If the received metric value is consistent with the measurement value computed by the third-party server according to the algorithm, verification on the integrity of the TEE side of the host succeeds. If the received metric value is inconsistent with the measurement value computed by the third-party server according to the algorithm, the verification on the integrity of the TEE side of the host fails. The third-party server sends a verification success result or a verification failure result to the security management module on the TEE side of the heterogeneous device, and the security management module on the TEE side of the heterogeneous device obtains the verification result.

S102: When the verification on the integrity of the TEE side of the host succeeds, the TEE side of the heterogeneous device receives an access request that is of the virtual machine running on the TEE side of the host and that is for the TEE side of the heterogeneous device.

When the verification on the integrity of the TEE side of the host succeeds, the TEE side of the heterogeneous device and the TEE side of the host generate a session key over a key exchange protocol, and establish an encrypted channel. Then, the TEE side of the heterogeneous device and the TEE side of the host communicate with each other through the encrypted channel. For example, the TEE side of the heterogeneous device receives, through the encrypted channel, the access request sent by the virtual machine running on the TEE side of the host. The TEE side of the heterogeneous device processes confidential data based on the access request, to obtain a processing result, and returns the processing result to the virtual machine on the TEE side of the host through the encrypted channel.

For example, in the diagram of FIG. 7, when the verification on the integrity of the TEE side of the host succeeds, the security management module on the TEE side of the heterogeneous device and the security management module on the TEE side of the host generate a session key over a key exchange protocol, and establish an encrypted channel. The security management module on the TEE side of the heterogeneous device receives, through the encrypted channel, an access request sent by the virtual machine 3 running on the TEE side of the host, processes the confidential data based on the access request, to obtain a processing result, and returns the processing result to the virtual machine 3 on the TEE side of the host through the encrypted channel.

S103: When the verification on the integrity of the TEE side of the host fails, the TEE side of the heterogeneous device rejects to receive the access request that is of the virtual machine running on the TEE side of the host and that is for the TEE side of the heterogeneous device.

When the verification on the integrity of the TEE side of the host fails, the TEE side of the heterogeneous device and the TEE side of the host cannot establish an encrypted channel, and the TEE side of the heterogeneous device rejects to receive the access request that is of the virtual machine running on the TEE side of the host and that is for the TEE side of the heterogeneous device.

Optionally, the method further includes: The TEE side of the host verifies the integrity of the TEE side of the heterogeneous device. Specifically, the TEE side of the host sends a request to the TEE side of the heterogeneous device, where the request is used to verify the integrity of the TEE side of the heterogeneous device, and the request carries a random number nonce. The TEE side of the heterogeneous device computes a measurement value based on the random number, and sends the measurement value to the TEE side of the host. The TEE side of the host determines the integrity of the TEE side of the heterogeneous device based on the measurement value. The operation of verifying the integrity of the TEE side of the heterogeneous device by the TEE side of the host may be performed before step S101, or may be performed after step S101. This is not limited in this application.

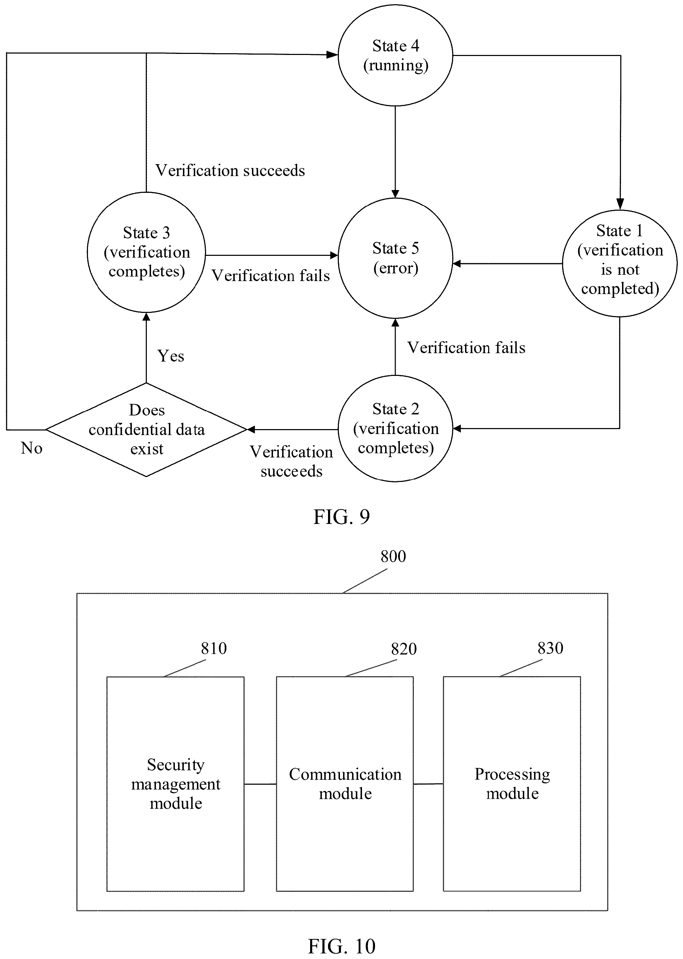

Optionally, in an implementation, when verification on the integrity of the TEE side of the heterogeneous device succeeds and verification on the integrity of the TEE side of the host succeeds, the TEE side of the heterogeneous device and the TEE side of the host generate a session key over a key exchange protocol, and establish an encrypted channel. The TEE side of the heterogeneous device and the TEE side of the host communicate with each other through the encrypted channel. In this embodiment of this application, a state machine that needs to be maintained by the heterogeneous device is shown in FIG. 9. In FIG. 9,
a state 1 indicates that verification that is on the integrity of the TEE side of the heterogeneous device and that is performed by the TEE side of the host is not completed, and includes an unverified state or a verifying state.

A state 2 indicates that the verification that is on the integrity of the TEE side of the heterogeneous device and that is performed by the TEE side of the host is completed. The state 2 indicates that the verification on the integrity of the TEE side of the heterogeneous device is complete. If a verification result is that verification fails, a state 5 is entered. If the verification result is that verification succeeds, whether the confidential data exists on the TEE side of the heterogeneous device is determined. If the confidential data exists, the heterogeneous device needs to verify the integrity of the TEE side of the host. If no confidential data exists on the TEE side of the heterogeneous device, the TEE side of the host directly communicates with the TEE side of the heterogeneous device, and the TEE side of the host and the TEE side of the heterogeneous device are in a running state.

A state 3 indicates that when the confidential data exists on the TEE side of the heterogeneous device, verification that is on the integrity of the TEE side of the host and that is performed by the TEE side of the heterogeneous device is completed.

A state 4 indicates that when the verification on the integrity of the TEE side of the host is completed, and a verification result is that the verification succeeds, the TEE side of the host and the TEE side of the heterogeneous device are in a communication running state.

A state 5 indicates an error state, including various error cases, for example, a case in which an error occurs in a process of verifying the integrity of the TEE side of the heterogeneous device (from the state 1 to the state 5), a case in which verification on the integrity of the TEE side of the heterogeneous device fails (from the state 2 to the state 5), a case in which verification on the integrity of the TEE side of the host fails (from the state 3 to the state 5), and a case in which an error occurs in a process of verifying the integrity of the TEE side of the host (from the state 3 to the state 5).

In the heterogeneous device, a state bit indicating whether the confidential data exists is added. In a specific implementation, the state bit may be implemented through an electronic fuse (electronic fuse, e-fuse for short). When confidential data is loaded, the electronic fuse is blown, to ensure that the heterogeneous device runs in a protection state.

It can be learned that this application provides a new application scenario: The confidential data is preset in the heterogeneous device, and the host and the virtual machine running on the host are not allowed to obtain the confidential data in the heterogeneous device. The host and the virtual machine running on the host can only send an access request to the heterogeneous device, so that the heterogeneous device processes the confidential data based on the access request. The heterogeneous device returns a processing result to the host or the virtual machine, so that the host or the virtual machine uses the confidential data for computing. In view of the new application scenario provided in this application, to prevent the confidential data from being obtained by another device, in the solution of this application, resources in the heterogeneous device are divided into the TEE side and the REE side, and the confidential data is preset on the TEE side of the heterogeneous device. When the virtual machine running on the TEE side of the host needs to access the confidential data, the TEE side of the heterogeneous device initiates an integrity verification challenge to the TEE side of the host. If the verification on the integrity of the TEE side of the host succeeds, the TEE side of the heterogeneous device receives the access request sent by the virtual machine on the TEE side of the host. If the verification on the integrity of the TEE side of the host fails, the TEE side of the heterogeneous device rejects to receive the access request sent by the virtual machine on the TEE side of the host. The method embodiment of this application resolves requirements of the new application scenario, and achieves an objective of preventing the confidential data from being obtained by the virtual machine and a cloud service platform.

The data confidentiality method provided in this application is described above. Based on a same inventive concept, the following continues to describe the heterogeneous device provided in this application.

FIG. 10 is a diagram of structure of a heterogeneous device 800 according to this application. Some or all hardware resources in the heterogeneous device 800 are divided into a trusted execution environment TEE side, confidential data is preset on the TEE side of the heterogeneous device 800, and the heterogeneous device 800 includes:
a security management module 810, configured to verify, on a TEE side of the heterogeneous device 800, integrity of a TEE side of a host, where the integrity of the TEE side of the host includes that a virtual machine running on the TEE side of the host does not have a read operation capability and a write operation capability on confidential data in the heterogeneous device 800, the heterogeneous device 800 and the host form a heterogeneous system, and the security management module 810 is located on the TEE side of the heterogeneous device 800; and
a communication module 820, configured to: when verification on the integrity of the TEE side of the host succeeds, receive, on the TEE side of the heterogeneous device 800, an access request that is of the virtual machine running on the TEE side of the host and that is for the TEE side of the heterogeneous device 800.

In a possible implementation, the security management module 810 is configured to: verify, on the TEE side of the heterogeneous device 800, integrity of a virtual machine manager hypervisor on the TEE side of the host, and/or integrity of a virtual function driver module of the virtual machine running on the TEE side of the host, where the integrity of the virtual machine manager hypervisor includes that a target address is not mapped to the virtual machine manager hypervisor, the target address includes a mapping address of the confidential data in the heterogeneous device 800 in a memory of the host, and the integrity of the virtual function driver module includes forbidding the virtual machine to perform a read operation and a write operation on the target address.

In a possible implementation, the security management module 810 is configured to generate a random number on the TEE side of the heterogeneous device 800. The communication module 820 is configured to send the random number to the TEE side of the host. The communication module 820 is further configured to receive, on the TEE side of the heterogeneous device 800, a measurement value sent by the TEE side of the host. The security management module 810 is configured to verify the integrity of the TEE side of the host based on the measurement value.

In a possible implementation, the access request carries input data. The heterogeneous device 800 further includes a processing module 830. The processing module 830 is configured to perform processing based on the input data using the confidential data, to obtain a processing result. The communication module 820 is configured to send the processing result to the virtual machine running on the TEE side of the host.

In a possible implementation, the communication module 820 is further configured to: the verification on the integrity of the TEE side of the host fails, reject, on the TEE side of the heterogeneous device 800, receiving the access request that is of the virtual machine running on the TEE side of the host and that is for the TEE side of the heterogeneous device 800.

It may be understood that unit modules in the heterogeneous device 800 may also be divided in a plurality of manners. The modules may be software modules or may be hardware modules, or a part of the modules may be software modules and the other part of the modules may be hardware modules. This is not limited in this application. FIG. 10 is an example of introducing functions of modules of the heterogeneous device 800. The functions of the modules described in the example are only functions that the heterogeneous device 800 may have in some embodiments of this application. Functions of the modules are not limited in this application. Specifically, for specific implementation of performing various operations by the heterogeneous device 800, refer to descriptions in related content in the foregoing embodiments of the data confidentiality method. For brevity of this specification, details are not described herein again.

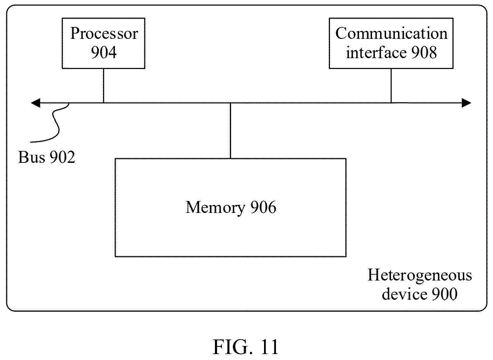

This application provides a heterogeneous device 900. FIG. 11 is a diagram of an entity structure of the heterogeneous device 900 according to this application. The heterogeneous device 900 includes:
a bus 902, a processor 904, a memory 906, and a communication interface 908. The processor 904, the memory 906, and the communication interface 908 communicate with each other through the bus 902. It should be understood that a quantity of processors and a quantity of memories in the heterogeneous device 900 are not limited in this application.

The bus 902 may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 902 may include a path for transmitting information between components (for example, the memory 906, the processor 904, and the communication interface 908) of the heterogeneous device 900.

The processor 904 may include any one or more of processors such as a graphics processing unit (graphics processing unit, GPU), a neural network processing unit (neural network processing unit, NPU), a microprocessor (microprocessor, MP), or a digital signal processor (digital signal processor, DSP).

The memory 906 may include a volatile memory (volatile memory), for example, a random access memory (random access memory, RAM). Alternatively, the memory 906 may include a non-volatile memory (non-volatile memory), for example, a read-only memory (read-only memory, ROM), a flash memory, a hard disk drive (hard disk drive, HDD), or a solid-state drive (solid-state drive, SSD).

The memory 906 stores executable code, and the processor 904 executes the executable code to implement a function of the heterogeneous device 800, to implement a data confidentiality method. In other words, the memory 906 stores instructions for performing the data confidentiality method.

The communication interface 908 uses a transceiver module, for example, but not limited to, a network interface card or a transceiver, to implement communication between the heterogeneous device 900 and another device or a communication network.

An embodiment of this application further provides a data confidentiality system, including a host and a heterogeneous device. Some or all hardware resources in the heterogeneous device are divided into a trusted execution environment TEE side, some hardware resources in the host are divided into a trusted execution environment TEE side, confidential data is preset on the TEE side of the heterogeneous device, and the heterogeneous device may be the heterogeneous device 800 or the heterogeneous device 900.

An embodiment of this application further provides a computer program product including instructions. When the computer program product runs on at least one heterogeneous device, the at least one heterogeneous device is enabled to perform a data confidentiality method.

An embodiment of this application further provides a readable storage medium. The readable storage medium may be any usable medium that can be stored by a heterogeneous device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The readable storage medium includes instructions, and the instructions instruct a heterogeneous device to perform a data confidentiality method.

In the foregoing embodiments, the description of each embodiment has respective focuses. For a part that is not described in detail in an embodiment, reference may be made to related descriptions in other embodiments.

All or a part of the foregoing embodiments may be implemented by using software, hardware, or any combination thereof. When software is used to implement the embodiments, all or a part of the embodiments may be implemented in a form of a computer program product. The computer program product includes one or more computer instructions. When the computer program instructions are loaded and executed on a heterogeneous device, all or some of the procedures or functions according to embodiments of this application are generated. The heterogeneous device may be a GPU, an NPU, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

## Claims

1. A data confidentiality method, wherein the method is applied to a heterogeneous device, some or all hardware resources in the heterogeneous device are divided into a trusted execution environment TEE side, confidential data is preset on the TEE side of the heterogeneous device, and the method comprises:
verifying, by a processor of the heterogeneous device on the TEE side, integrity of a TEE side of a host, wherein the integrity of the TEE side of the host comprises that a virtual machine running on the TEE side of the host does not have a read operation capability and a write operation capability on the confidential data in the heterogeneous device, and the heterogeneous device and the host form a heterogeneous system; and
when verification on the integrity of the TEE side of the host succeeds, receiving, by the TEE side of the heterogeneous device, an access request that is of the virtual machine running on the TEE side of the host and that is for the TEE side of the heterogeneous device.

2. The method according to claim 1, wherein verifying, on the TEE side by the processor of the heterogeneous device, the integrity of the TEE side of the host comprises:
verifying, by the processor of the heterogeneous device on the TEE side, integrity of a virtual machine manager hypervisor on the TEE side of the host, and/or integrity of a virtual function driver module of the virtual machine running on the TEE side of the host, wherein the integrity of the virtual machine manager hypervisor comprises that a target address is not mapped to the virtual machine manager hypervisor, the target address comprises a mapping address of the confidential data in the heterogeneous device in a memory of the host, and the integrity of the virtual function driver module comprises forbidding the virtual machine to perform a read operation and a write operation on the target address.

3. The method according to claim 1 or 2, wherein verifying, on the TEE side by the processor of the heterogeneous device, the integrity of the TEE side of the host comprises:
generating, by the processor of the heterogeneous device, a random number on the TEE side, and sending the random number to the TEE side of the host; and
receiving, by the processor of the heterogeneous device on the TEE side, a measurement value sent by the TEE side of the host, and verifying the integrity of the TEE side of the host based on the measurement value.

4. The method according to any one of claims 1 to 3, wherein the access request carries input data, and the method further comprises:
performing, by the processor of the heterogeneous device based on the input data, processing using the confidential data, to obtain a processing result; and
sending, by the processor of the heterogeneous device, the processing result to the virtual machine running on the TEE side of the host.

5. The method according to any one of claims 1 to 4, wherein the method further comprises:
when the verification on the integrity of the TEE side of the host fails, rejecting, by the TEE side of the heterogeneous device, to receive the access request that is of the virtual machine running on the TEE side of the host and that is for the TEE side of the heterogeneous device.

6. A heterogeneous device, wherein some or all hardware resources in the heterogeneous device are divided into a trusted execution environment TEE side, confidential data is preset on the TEE side of the heterogeneous device, and the heterogeneous device comprises:
a security management module, configured to verify, on the TEE side of the heterogeneous device, integrity of a TEE side of a host, wherein the integrity of the TEE side of the host comprises that a virtual machine running on the TEE side of the host does not have a read operation capability and a write operation capability on the confidential data in the heterogeneous device, the heterogeneous device and the host form a heterogeneous system, and the security management module is located on the TEE side of the heterogeneous device; and
a communication module, configured to: when verification on the integrity of the TEE side of the host succeeds, receive, on the TEE side of the heterogeneous device, an access request that is of the virtual machine running on the TEE side of the host and that is for the TEE side of the heterogeneous device.

7. The heterogeneous device according to claim 6, wherein the security management module is configured to:
verify, on the TEE side of the heterogeneous device, integrity of a virtual machine manager hypervisor on the TEE side of the host, and/or integrity of a virtual function driver module of the virtual machine running on the TEE side of the host, wherein the integrity of the virtual machine manager hypervisor comprises that a target address is not mapped to the virtual machine manager hypervisor, the target address comprises a mapping address of the confidential data in the heterogeneous device in a memory of the host, and the integrity of the virtual function driver module comprises forbidding the virtual machine to perform a read operation and a write operation on the target address.

8. The heterogeneous device according to claim 6 or 7, wherein
the security management module is configured to generate a random number on the TEE side of the heterogeneous device;
the communication module is configured to send the random number to the TEE side of the host;
the communication module is configured to receive, on the TEE side of the heterogeneous device, a measurement value sent by the TEE side of the host; and
the security management module is configured to verify the integrity of the TEE side of the host based on the measurement value.

9. The heterogeneous device according to any one of claims 6 to 8, wherein the access request carries input data, and the heterogeneous device further comprises:
a processing module, configured to perform processing based on the input data using the confidential data, to obtain a processing result; and
the communication module is configured to send the processing result to the virtual machine running on the TEE side of the host.

10. The heterogeneous device according to any one of claims 6 to 9, wherein
the communication module is further configured to: when the verification on the integrity of the TEE side of the host fails, reject, on the TEE side of the heterogeneous device, to receive the access request that is of the virtual machine running on the TEE side of the host and that is for the TEE side of the heterogeneous device.

11. A data confidentiality system, comprising a host and a heterogeneous device, wherein some or all hardware resources in the heterogeneous device are divided into a trusted execution environment TEE side, some hardware resources in the host are divided into a trusted execution environment TEE side, confidential data is preset on the TEE side of the heterogeneous device, and the heterogeneous device is configured to perform the method according to any one of claims 1 to 5.

12. A heterogeneous device, comprising a memory and a processor, wherein the memory is configured to store instructions, and the processor is configured to execute the instructions stored in the memory to implement the method according to any one of claims 1 to 5.

13. A computer storage medium, comprising program instructions, wherein when the program instructions are executed by a processor, the processor is enabled to perform the method according to any one of claims 1 to 5.

14. A computer program product, comprising program instructions, wherein when the program instructions are run by a processor, the processor is enabled to perform the method according to any one of claims 1 to 5.
